# EUROPEAN PATENT SPECIFICATION

(11) **EP 3 706 373 B1**
(45) Date of publication and mention of the grant of the patent: **05.07.2023**
(21) Application number: 20161020.1
(22) Date of filing: 04.03.2020
(51) Int. Cl.: H04L 12/46

(54) **ESTABLISHING A VXLAN BETWEEN A WIRELESS ACCESS POINT AND A NODE**
EINRICHTEN EINES VXLAN ZWISCHEN EINEM DRAHTLOSER ZUGANGSPUNKT UND EINEM KNOTEN
ÉTABLISSEMENT D'UN VXLAN ENTRE UN POINT D'ACCÈS SANS FIL ET UN NOEUD

(30) Priority: 05.03.2019 CN 201910163488
(43) Date of publication of application: 09.09.2020
(73) Proprietor: Huawei Technologies Co., Ltd., Shenzhen, Guangdong 518129 (CN)
(72) Inventor: LIN, Zhihong, Shenzhen, Guangdong 518129 (CN); LIU, Wei, Shenzhen, Guangdong 518129 (CN)
(74) Representative: Pfenning, Meinig & Partner mbB

(56) References cited:
- US-A1- 2013 322 453
- US-A1- 2016 294 769
- US-A1- 2017 034 053
- US-A1- 2017 317 850

## Description

### TECHNICAL FIELD

This application relates to the communications field, and in particular, to a method for establishing a virtual extensible local area network (virtual extensible local area network, VxLAN), a wireless controller, and a switch.

### BACKGROUND

An overlay network (overlay network) may be implemented by using a VxLAN technology. The trend of wired and wireless convergence drives wireless local area network (WLAN) devices to support the overlay network. Currently, a user manually configures a VxLAN on a WLAN device (for example, an access point (access point, AP)) and a switch. However, manual configuration is complex and requires heavy workload.

US 2017/317850 A1 discloses a SDN controller receives a packet sent by a VTEP to be forwarded at the layer-3. The SDN controller may determine at least one VXLAN gateway that could reach the destination node of the packet and which is located in the same VXLAN with a source node of the packet, as a forwarding gateway. After forwarding gateway is determined, the SDN controller may distribute a flow entry to the VTEP, which may help VTEP to forward the packets sent from the source node to the destination node to the determined forwarding gateway.

US20160294769 discloses a VTEP may intercept a broadcast packet that does not have a destination address and that is sent by a transmit-end virtual machine, acquire an IP address list of a receive-end VTEP that belongs to same VXLAN as the transmit-end VTEP, encapsulate the broadcast packet into a unicast packet according to an IP address of the receive-end VTEP, and send, in a form of the unicast packet, the original packet to another receive-end VTEP on the same VXLAN, where avoiding using a multicast manner to perform communication between VTEPs on the VXLAN such that construction of the VXLAN no longer depends on a multicast group quantity or capability of a tunnel end point, which extends application of the VXLAN.

### SUMMARY

The present invention is defined in the appended independent claims to which reference should be made. Advantageous features are set out in the appended dependent claims.

### BRIEF DESCRIPTION OF DRAWINGS

FIG. 1 is a schematic architectural diagram of an overlay network;
FIG. 2 is a schematic architectural diagram of establishing a VxLAN between an AP and a switch shown in FIG. 1 according to an embodiment of this application;
FIG. 3A and FIG. 3B are a schematic flowchart for establishing a VxLAN according to an embodiment of this application;
FIG. 4A and FIG. 4B are a schematic flowchart of a method for establishing a VxLAN between an AP and an edge node according to an embodiment of this application;
FIG. 5A and FIG. 5B are a schematic flowchart of a method for establishing a VxLAN between an AP and a border node according to an embodiment of this application;
FIG. 6 is a schematic structural diagram of a wireless controller according to an embodiment of this application;
FIG. 7 is a schematic structural diagram of a switch according to an embodiment of this application;
FIG. 8 is a schematic structural diagram of another wireless controller according to an embodiment of this application; and
FIG. 9 is a schematic structural diagram of another switch according to an embodiment of this application.

### DESCRIPTION OF EMBODIMENTS

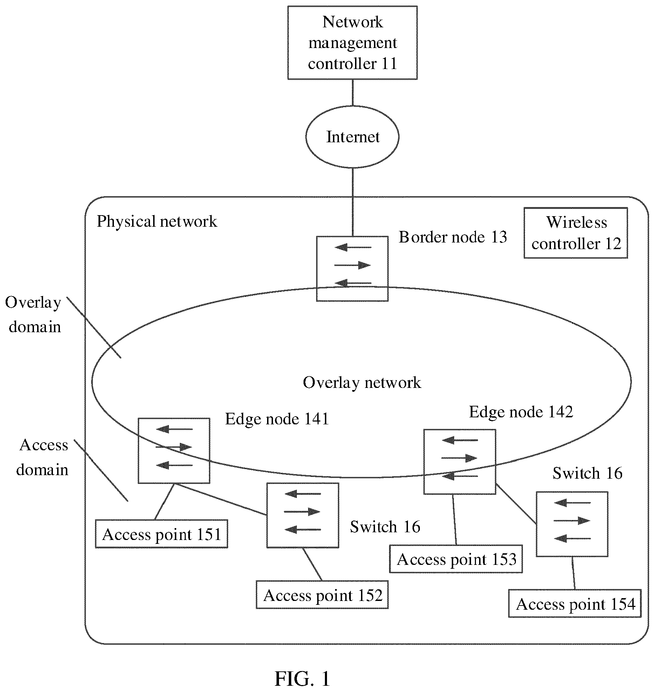

FIG. 1 is a schematic architectural diagram of an overlay network. As shown in FIG. 1, an overlay network is constructed on an underlay network (underlay network). An overlay network layer carries network services to decouple the services from the network, facilitating management of the network services. A network management controller 11 is responsible for managing a physical network and the overlay network. A wireless controller 12 controls an access point. A core switch functions as a border node (border node) 13 and is responsible for packet forwarding between the overlay network and a third-party network. A switch at an aggregation layer or an access layer functions as an edge node (edge node) and functions as a VxLAN gateway of a user. Traffic from an access user enters a VxLAN network through the switch. In the physical network, one or more access points may be connected to one or more edge nodes by using a switch or directly. As shown in FIG. 1, an access point 151 and an access point 152 may be connected to an edge node 141 by using a switch 16 or directly (the access point 151 may be wiredly connected to the edge node 141, and the access point 152 may be wirelessly connected to the edge node 141). An access point 153 and an access point 154 may be connected to an edge node 142 by using the switch 16 or directly (the access point 153 may be wiredly connected to the edge node 142, and the access point 154 may be wirelessly connected to the edge node 142). The edge nodes may be connected to the border node 13 by using a switch or directly.

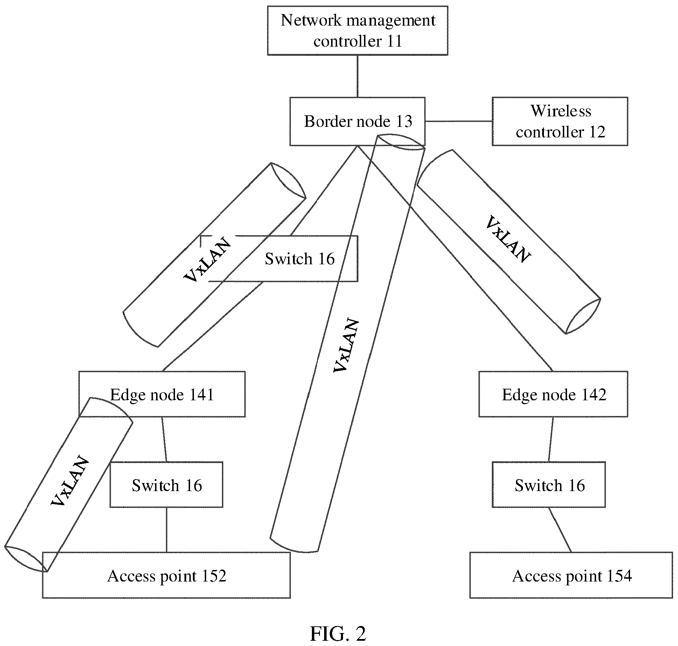

FIG. 2 is a schematic architectural diagram of automatically establishing a VxLAN between an AP and a switch shown in FIG. 1 according to an embodiment of this application. The VxLAN is established between the access point and the switch.

Specifically, when the AP accesses a network by using a distributed wireless gateway, the switch may be an edge node, and a VxLAN is established between the AP and the edge node. When the AP accesses the network by using a centralized wireless gateway, the switch may be a border node, and a VxLAN is established between the AP and the border node. For example, as shown in FIG. 2, the access point 152 is wirelessly connected to the edge node 141, and a VxLAN may be established between the access point 152 and the border node 13 or the edge node 141. Certainly, a VxLAN may also be established between the access point 154 and the border node 13 or the edge node 142. Optionally, a VxLAN has been established between the border node 13 and the edge node 141 or the edge node 142.

The following describes DHCP that may be involved in this application:
DHCP includes DHCPv4 and DHCPv6. They have a same working mechanism but different formats and field values. In the following, DHCPv4 is taken as an example to describe DHCP. DHCP uses a user datagram protocol (user datagram protocol, UDP) as a transport layer protocol. A host sends a request message to a port 67 of a DHCP server (DHCP server), and the DHCP server returns a response message to a port 68 of the host. A detailed interaction process is as follows:
1. A DHCP client (DHCP client) sends a DHCP discover (DHCP discover) packet in a broadcast mode.
2. All DHCP servers can receive the DHCP discover packet sent by the DHCP client. All the DHCP servers respond by sending a DHCP offer (DHCP offer) packet to the DHCP client.

A "Your (client) IP Address" field in the DHCP offer packet indicates an IP address that the DHCP server can provide for the DHCP client. The DHCP server places its own IP addresses in an option (option) field so that the DHCP client can distinguish different DHCP servers. After the DHCP server sends the packet, a record indicating that an IP address is allocated exists.

3. The DHCP client can process only one DHCP offer packet. A general principle is that the DHCP client processes a first received DHCP offer packet.

The DHCP client sends a broadcast DHCP request (DHCP request) packet, and adds an IP address of a selected DHCP server and a required IP address to the option field.
4. After receiving the DHCP request packet, the DHCP server determines whether the IP address in the option field is the same as its own IP address. If they are different, the DHCP server does not perform any operation but deletes the corresponding IP address allocation record. If they are the same, the DHCP server sends a DHCP ACK (DHCP ACK) packet to the DHCP client and adds IP address lease information to the option field.
5. After receiving the DHCP ACK packet, the DHCP client checks whether the IP address allocated by the DHCP server is available. If the IP address is available, the DHCP client successfully obtains the IP address and automatically starts a renewal process based on the IP address lease. If the DHCP client finds that the allocated IP address is in use, the DHCP client sends a DHCP decline (DHCP decline) packet to the DHCP server to instruct the DHCP server to disable the IP address. Then, the DHCP client starts a new address application process.
6. After successfully obtaining the IP address, the DHCP client can send a DHCP release (DHCP release) packet to release its IP address at any time. After receiving the DHCP release packet, the DHCP server reclaims the corresponding IP address and re-allocates it.

Embodiments of this application provide a method for establishing a VxLAN, a wireless controller, and a switch. The wireless controller receives a message from a wireless access point. In response to the message, the wireless controller establishes a channel between the wireless controller and the wireless access point and sends a first instruction to the wireless access point through the channel. The first instruction is used to instruct the wireless access point to add a record of a first VTEP, and an IP address in the record of the first VTEP is an IP address of a switch. A VxLAN between the AP and the switch can be automatically configured on the AP by using a solution in this application, so that a WLAN device can support an overlay network. Manual operation is not required in a VxLAN establishment process, reducing workload for a user.

The following describes the embodiments of this application with reference to the accompanying drawings in the embodiments of this application.

It should be noted that the terms "system" and "network" in the embodiments of this application may be used interchangeably. "A plurality of" means two or more. In view of this, "a plurality of" may also be understood as "at least two" in the embodiments of this application. The term "and/or" describes an association relationship for describing associated objects and represents that three relationships may exist. For example, A and/or B may represent the following three cases: Only A exists, both A and B exist, and only B exists.

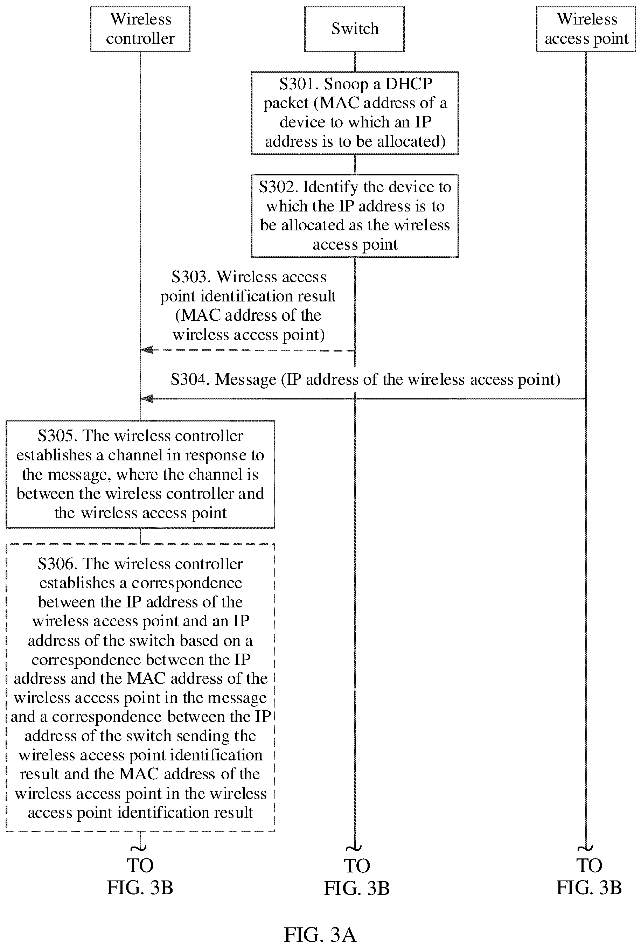

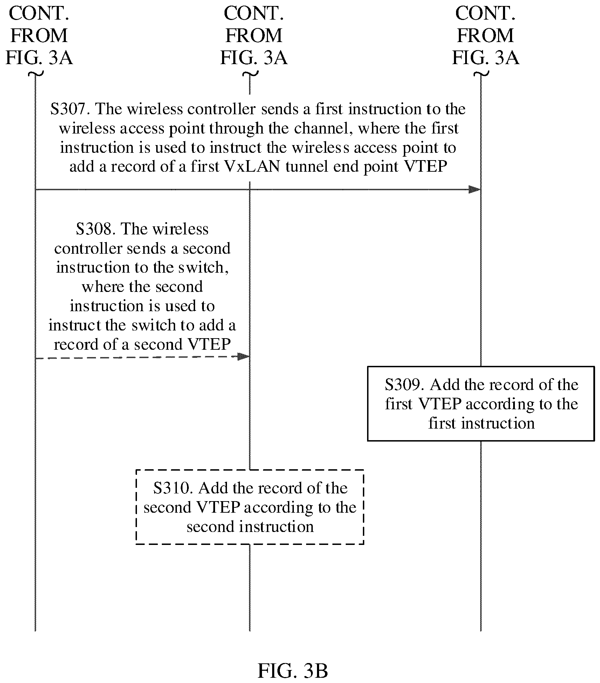

FIG. 3A and FIG. 3B are a schematic flowchart for establishing a VxLAN according to an embodiment of this application, which can be applied to a networking architecture shown in FIG. 2.

S301. A switch snoops to a DHCP packet.

The DHCP packet includes a MAC address of a device to which an IP address is to be allocated.

The switch in this embodiment is a switch with which the AP is expected to establish a VxLAN. For example, the switch may be the border node 13, the edge node 141 or the edge node 142 shown in FIG. 2.

The AP goes online by applying for an IP address through a DHCP protocol. In this case, the AP is the device to which the IP address is to be allocated. In this embodiment, the AP is the foregoing DHCP client. The switch can snoop the DHCP packet broadcast by the AP. The DHCP packet is forwarded by the switch to a DHCP server. The DHCP packet includes the MAC address of the device, that is, a MAC address of the AP.

S302. The switch identifies the device to which the IP address is to be allocated as the AP.

The DHCP packet carries an option for identifying a device type. For example, the option is an option 60 in DHCPv4 and the option 60 includes a specific identifier of a vendor. The option 60 is used by the AP to report its vendor and configuration information. The DHCP packet herein may be the foregoing DHCP discover packet or the foregoing DHCP request packet. The switch may identify, based on the specific identifier in the option 60, the device to which the IP address is to be allocated as the AP.

In addition, the DHCP packet may further carry a device capability of the AP, and the device capability is used to indicate that the AP has a capability of establishing a VXLAN.

S303. The switch sends an AP identification result to a wireless controller. Correspondingly, the wireless controller receives the AP identification result.

The switch sends the AP identification result to the wireless controller. The AP identification result includes the MAC address of the AP, and may further include the device capability of the AP. The wireless controller stores the MAC address of the AP. The switch sends the AP identification result to the wireless controller. For example, the switch may directly send the AP identification result to the wireless controller, or may send the AP identification result through a channel between the switch and the wireless controller. In an implementation, the channel may be already established. In another implementation, before S301, a network management controller delivers the IP address of the switch to the wireless controller, the network management controller also delivers the IP address of the wireless controller to the switch, and the wireless controller may establish the foregoing channel between the wireless controller and the switch based on the IP address of the switch.

S301 to S303 is a process in which the switch discovers and identifies the AP, and notifies the wireless controller of the AP identification result. S303 is used to notify the wireless controller of a relationship between the switch and the AP. It may be understood that, in a case that there are a plurality of switches and there is a connection relationship between the AP and one of the switches, the switch needs to notify the wireless controller of the relationship between the switch and the AP, so that S303 is mandatory; in a case that there is only one switch, it may be assumed that a VxLAN needs to be established between the switch and all APs, and the wireless controller considers there is a correspondence by default, so that S303 is optional.

S304. The wireless controller receives a message from the AP, where the message includes the IP address of the AP.

After applying for the IP address by using DHCP, the AP can send the message to the wireless controller for registration. The message includes the foregoing IP address that is applied for. The message may further include the MAC address of the AP.

S305. The wireless controller establishes a channel in response to the message, where the channel is between the wireless controller and the AP.

After receiving the IP address of the AP, the wireless controller establishes the channel between the wireless controller and the AP, and may further respond to the foregoing message through the channel, to notify the AP that the registration succeeds. The channel between the wireless controller and the AP is a control and provisioning of wireless access points (control and provisioning of wireless access points, CAPWAP) channel.

After establishing the CAPWAP channel with the AP, the wireless controller may authenticate the AP according to a CAPWAP authentication mechanism, and identify the AP as an authenticated or a trusted device or a device that can establish a VxLAN with the switch.

S306. The wireless controller establishes a correspondence between the IP address of the AP and the IP address of the switch based on a correspondence between the IP address and the MAC address of the AP in the message and a correspondence between the IP address of the switch sending the AP identification result and the MAC address of the AP in the AP identification result.

After identifying the AP as an authenticated or a trusted device or a device that can establish a VxLAN with the switch, the wireless controller may establish the correspondence between the IP address of the AP and the IP address of the switch based on the IP address and the MAC address of the AP that are obtained in step S304.

It may be understood that, if one or more APs are physically and wirelessly connected to one switch, the wireless controller may consider by default that the one or more APs have the foregoing correspondence with the switch. Therefore, this step is optional. S307. The wireless controller sends a first instruction to the AP through the channel, where the first instruction is used to instruct the AP to add a record of a first VTEP, and an IP address in the record of the first VTEP is the IP address of the switch.

After determining that the foregoing correspondence between the IP address of the AP and the IP address of the switch exists, the wireless controller may send the first instruction to the AP through the channel between the wireless controller and the AP, to instruct the AP to add the record of the first VTEP, where the IP address in the record of the first VTEP is the IP address of the switch.

The VTEP is a VxLAN tunnel end point, and is configured to encapsulate and decapsulate a VxLAN packet. The VTEP connects to a physical network and is allocated with an IP address on the physical network. The address is used to encapsulate and decapsulate the VxLAN packet. In the VxLAN packet, a source IP address in an outer IP header is a VTEP address of a local end node (or referred to as a local end VTEP); in the VxLAN packet, a destination IP address in the outer IP header is a VTEP address of a peer node.

S308. The wireless controller sends a second instruction to the switch, where the second instruction is used to instruct the switch to add a record of a second VTEP, and an IP address in the record of the second VTEP is the IP address of the AP.

Optionally, if one or more APs are physically and wirelessly connected to one switch, the wireless controller may not need to send the second instruction to the switch, but may directly receive a packet that is sent by the AP by using the VxLAN, and parse an IP address in the packet to obtain the IP address of the AP. Therefore, this step is optional.

S309. The AP adds the record of the first VTEP according to the first instruction.

The AP adds the record of the first VTEP, and obtains the IP address of the switch, that is, establishes the VxLAN with the switch.

S310. The switch adds the record of the second VTEP according to the second instruction.

The switch adds the record of the second VTEP, and obtains the IP address of the AP, that is, establishes the VxLAN with the AP. Because S303 and S308 are optional and the switch may configure, by itself, a device that establishes a VxLAN with the switch, S310 is optional.

The VxLAN between the AP and the switch can be automatically configured on the AP according to a method for establishing the VxLAN provided in this embodiment of this application, so that a WLAN device can support an overlay network. Manual operation is not required in a VxLAN establishment process, reducing workload for a user.

In a scenario, an AP accesses a network through a distributed wireless gateway, and a VxLAN is established between the AP and an edge node. The following describes in detail a method for establishing the VxLAN between the AP and the edge node.

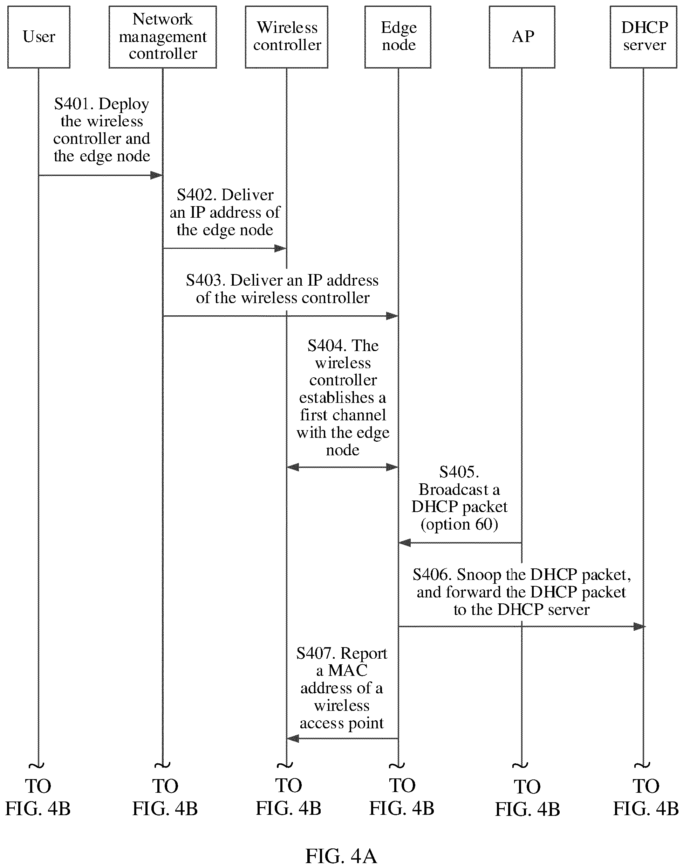

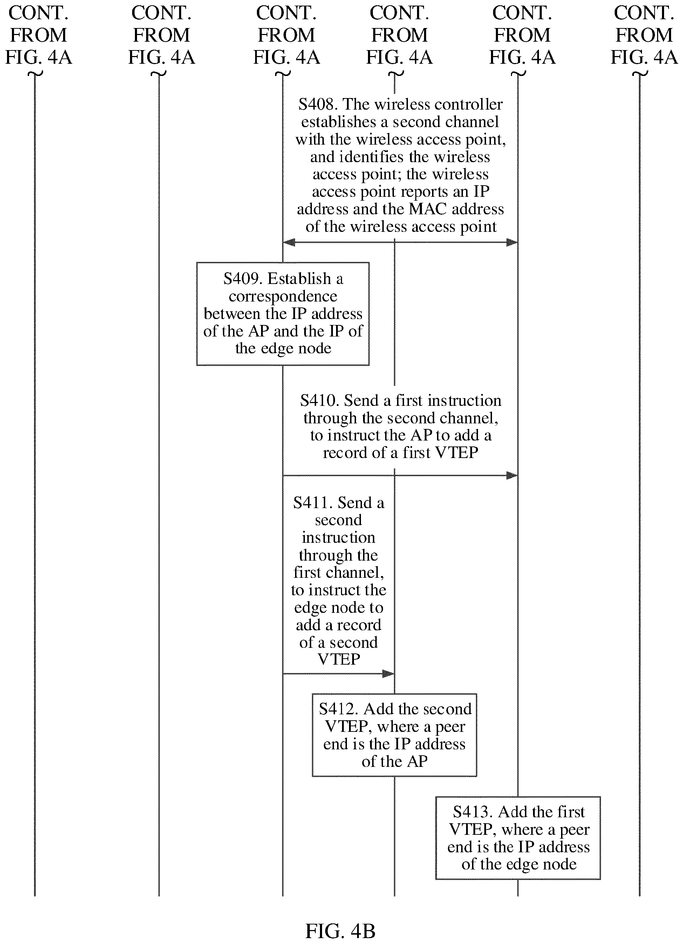

FIG. 4A and FIG. 4B are a schematic flowchart of a method for establishing a VxLAN between an AP and an edge node according to an embodiment of this application. 5401. A user deploys a wireless controller and an edge node on a network management controller.

Specifically, the user configures an IP address of the wireless controller and an IP address of the edge node, and configures the wireless controller to manage one or more edge nodes.

S402. The network management controller delivers the IP address of the edge node to the wireless controller.

There may be one or more edge nodes. The network management controller sends a list of IP addresses of the one or more edge nodes to the wireless controller. For example, the address list includes the following IP addresses of the edge nodes: (192.168.10.254, 192.168.20.254).

S403. The network management controller delivers the IP address of the wireless controller to the edge node.

For example, the IP address of the wireless controller is (192.168.30.1).

S404. The wireless controller establishes a first channel with the edge node.

According to steps S402 and S403, the wireless controller and the edge node know the IP address of each other, and the wireless controller may establish the first channel with the edge node based on the IP addresses. For example, a control channel connection is established by using CAPWAP.

S405. The AP broadcasts a DHCP packet, where the DHCP packet includes an option 60.

In this embodiment, the AP is the foregoing DHCP client. The AP goes online by applying for an IP address by using DHCP. The DHCP packet carries the option 60 and the option 60 includes a specific identifier of a vendor. The option 60 is used by the AP to report vendor and configuration information of the AP. The DHCP packet herein may be the foregoing DHCP discover packet or DHCP request packet.

S406. The edge node snoops the broadcast DHCP packet, and forwards the broadcast DHCP packet to a DHCP server.

For example, the edge node with the IP address (192.168.10.254) receives the DHCP packet sent by the AP, and forwards the DHCP packet to the DHCP server.

In addition, the edge node may identify the AP by using a specific identifier included in the option 60. For example, the edge node may identify the AP as an authorized device or a device that can establish a VxLAN with the edge node.

S407. The edge node reports a MAC address of the AP to the wireless controller.

The DHCP packet includes the MAC address of the AP, so that the edge node can obtain the MAC address of the AP and report the MAC address to the wireless controller. S408: The AP obtains an IP address 192.168.10.1 from the DHCP server by application, establishes a second channel with the wireless controller through a physical network, and reports the IP address of the AP to the wireless controller.

For example, the AP may establish a CAPWAP channel with the wireless controller through the physical network.

In addition, the AP may further report the MAC address of the AP to the wireless controller.

S409. The wireless controller identifies, based on information reported by the AP and the edge node, a correspondence between the IP address of the AP (192.168.10.1) and the IP address of the edge node (192.168.10.254), and generates a correspondence table, as shown in Table 1:

**Table 1 Correspondence between an IP of an AP and an IP of an edge node**

| | AP | Edge node |
|---|---|---|
| 1 | 192.168.10.1 | 192.168.10.254 |
| 2 | ... | ... |

Specifically, the wireless controller receives the MAC address of the AP reported by the edge node in step S407, determines the AP as an AP identified by the edge node, and then receives the MAC address and the IP address reported by the AP in step S408, so that the wireless controller may establish the correspondence between the IP of the AP and the IP of the edge node.

S410. The wireless controller sends a first instruction to the AP through the second channel.

The first instruction is used to instruct the AP to add a record of a first VTEP, and an IP address in the record of the first VTEP is the IP address of the edge node.

S411. The wireless controller sends a second instruction to the edge node through the first channel.

The second instruction is used to instruct the edge node to add a record of a second VTEP, and an IP address in the record of the second VTEP is the IP address of the AP. S412. The edge node adds the record of the second VTEP according to the second instruction.

The edge node (192.168.10.254) automatically establishes a VxLAN with the AP according to the second instruction sent by the wireless controller, and specifies an IP address of a peer VTEP as (192.168.10.1).

S413. The AP adds the record of the first VTEP according to the first instruction.

The AP (192.168.10.1) automatically establishes a VxLAN with the edge node according to the first instruction sent by the wireless controller, and specifies an IP address of a peer VTEP as (192.168.10.254).

In this way, the AP (192.168.10.1) automatically establishes the VxLAN with the edge node (192.168.10.254), implementing automatic overlay network establishment.

The VxLAN between the AP and the edge node can be established according to the method for establishing the VxLAN provided in this embodiment of this application, so that a WLAN device can support an overlay network. Manual operation is not required in a VxLAN establishment process, reducing workload for a user.

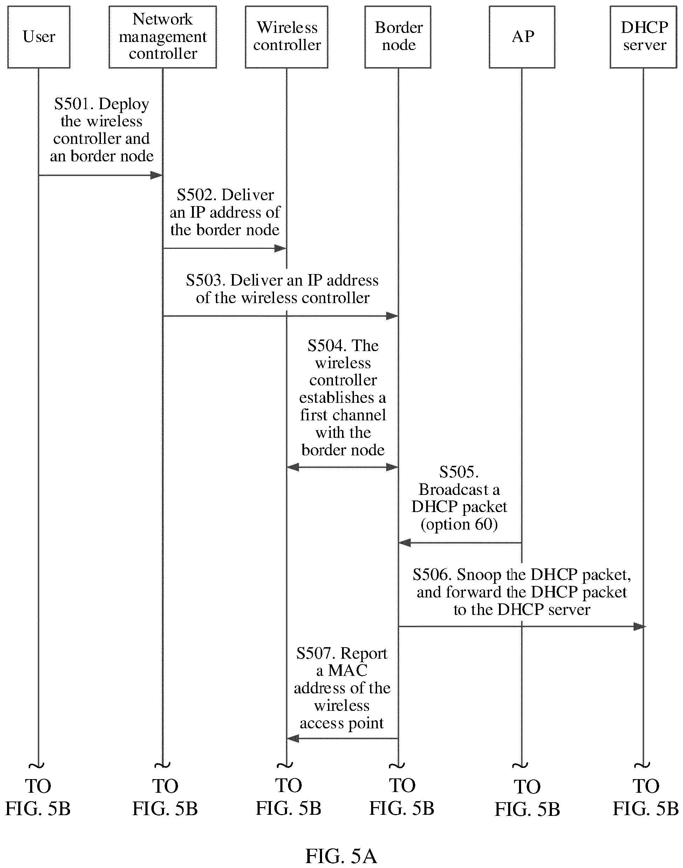

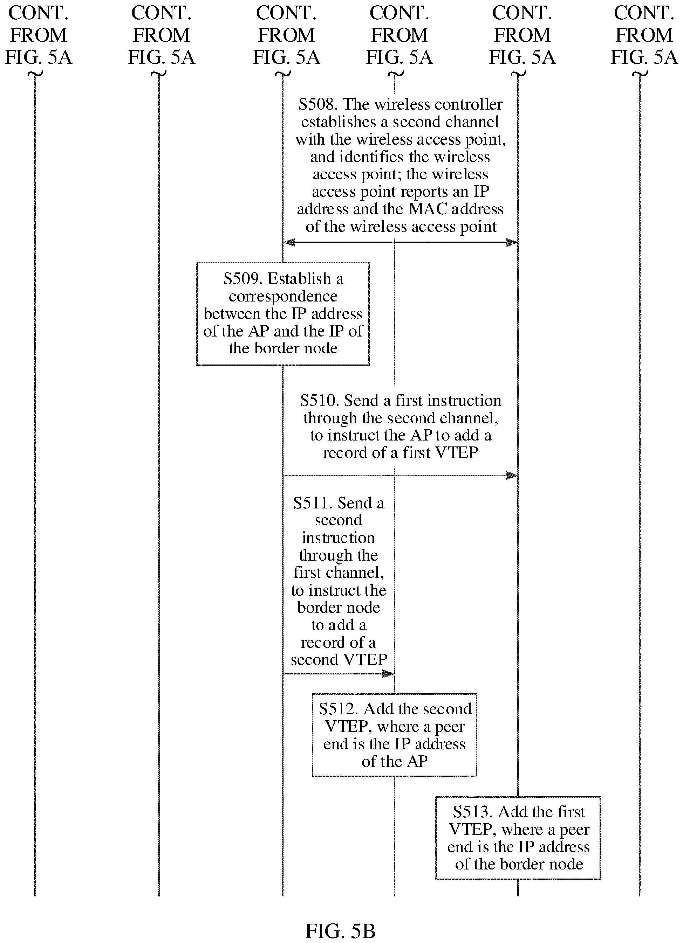

In another scenario, an AP accesses a network through a centralized wireless gateway. FIG. 5A and FIG. 5B are a schematic flowchart of a method for establishing a VxLAN between an AP and a border node according to an embodiment of this application. This embodiment is described by taking networking with a single border node as an example, and this solution is also applicable to networking with multiple border nodes.

S501. A user deploys a wireless controller and a border node on a network management controller.

Specifically, the user configures an IP address of the wireless controller and an IP address of the border node.

S502. The network management controller delivers the IP address of the border node to the wireless controller.

For example, the IP address of the border node is (192.168.20.254).

S503. The network management controller delivers the IP address of the wireless controller to the border node.

For example, the IP address of the wireless controller is (192.168.30.1).

S504: The wireless controller establishes a first channel with the border node.

According to steps S502 and S503, the wireless controller and the border node know the IP address of each other, and the wireless controller may establish the first channel with the border node based on the IP addresses. For example, a control channel connection is established by using CAPWAP.

S505. The AP broadcasts a DHCP packet, where the DHCP packet includes an option 60.

In this embodiment, the AP is the foregoing DHCP client. The AP goes online by applying for an IP address by using DHCP. The DHCP packet carries the option 60 and the option 60 includes a specific identifier of a vendor. The option 60 is used by the AP to report vendor and configuration information of the AP. The DHCP packet herein may be the foregoing DHCP discover packet or DHCP request packet.

S506. The border node snoops the broadcast DHCP packet, and forwards the broadcast DHCP packet to a DHCP server.

For example, the border node with the IP address (192.168.20.254) receives the DHCP packet sent by the AP, and forwards the DHCP packet to the DHCP server.

In addition, the border node may identify the AP by using a specific identifier included in the option 60. For example, the border node may identify the AP as an authorized device or a device that can establish a VxLAN with the border node.

S507. The border node reports a MAC address of the AP to the wireless controller. The DHCP packet includes the MAC address of the AP, so that the border node can obtain the MAC address of the AP and report the MAC address to the wireless controller. S508: The AP obtains an IP address 192.168.10.1 from the DHCP server by application, establishes a second channel with the wireless controller through a physical network, and reports the IP address of the AP to the wireless controller.

For example, the AP may establish a CAPWAP tunnel with the wireless controller through the physical network.

In addition, the AP may further report the MAC address of the AP to the wireless controller.

S509. The wireless controller identifies, based on information reported by the AP and the border node, a correspondence between the IP address of the AP (192.168.10.1) and the IP address of the border node (192.168.10.254), and generates a correspondence table, as shown in Table 2:

**Table 2 Correspondence between an IP of an AP and an IP of a border node**

| | AP | Border node |
|---|---|---|
| 1 | 192.168.10.1 | 192.168.20.254 |
| 2 | ... | ... |

Specifically, the wireless controller receives the MAC address of the AP reported by the border node in step S507, determines the AP as an AP identified by the border node, and then receives the MAC address and the IP address reported by the AP in step S508, so that the wireless controller may establish the correspondence between the IP of the AP and the IP of the border node.

S510. The wireless controller sends a first instruction to the AP through the second channel.

The first instruction is used to instruct the AP to add a record of a first VTEP, and an IP address in the record of the first VTEP is the IP address of the border node.

S511. The wireless controller sends a second instruction to the border node through the first channel.

The second instruction is used to instruct the border node to add a record of a second VTEP, and an IP address in the record of the second VTEP is the IP address of the AP. S512. The border node adds the record of the second VTEP according to the second instruction.

The border node (192.168.20.254) automatically establishes a VxLAN with the AP according to the second instruction sent by the wireless controller, and specifies an IP address of a peer VTEP as (192.168.10.1).

S513. The AP adds the record of the first VTEP according to the first instruction.

The AP (192.168.10.1) automatically establishes a VxLAN with the border node according to the first instruction sent by the wireless controller, and specifies an IP address of a peer VTEP as (192.168.20.254).

In this way, the AP (192.168.10.1) automatically establishes the VxLAN with the border node (192.168.20.254), implementing automatic overlay network establishment. The VxLAN between the AP and the border node can be established according to the method for establishing the VxLAN provided in this embodiment of this application, so that a WLAN device can support an overlay network. Manual operation is not required in a VxLAN establishment process, reducing workload for a user.

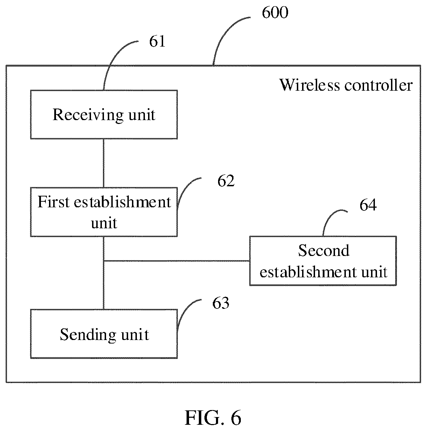

Based on a same concept of the method for establishing a VxLAN in the foregoing embodiment, as shown in FIG. 6, an embodiment of this application further provides a wireless controller 600. The wireless controller 600 may be applied to the method for establishing a VxLAN shown in FIG. 3A and FIG. 3B. The wireless controller 600 may be the wireless controller 21 shown in FIG. 2, or may be a component (for example, a chip) applied to the wireless controller 21. The wireless controller 600 includes a receiving unit 61, a first establishment unit 62, and a sending unit 63, and may further include a second establishment unit 64.

The receiving unit 61 is configured to receive a message from a wireless access point, where the message includes an internet protocol IP address of the wireless access point. The first establishment unit 62 is configured to establish a channel in response to the message, where the channel is between the wireless controller and the wireless access point.

The sending unit 63 is configured to send a first instruction to the wireless access point through the channel, where the first instruction is used to instruct the wireless access point to add a record of a first VxLAN tunnel end point VTEP, and an IP address in the record of the first VTEP is an IP address of a switch.

In an implementation, the sending unit 63 is further configured to send a second instruction to the switch, where the second instruction is used to instruct the switch to add a record of a second VTEP, and an IP address in the record of the second VTEP is the IP address of the wireless access point.

In another implementation, the message further includes a media access control MAC address of the wireless access point.

The receiving unit 61 is further configured to receive a wireless access point identification result sent by the switch, where the identification result includes the MAC address of the wireless access point.

The second establishment unit 64 is configured to establish a correspondence between the IP address of the wireless access point and the IP address of the switch based on a correspondence between the IP address and the MAC address of the wireless access point in the message and a correspondence between the IP address of the switch sending the wireless access point identification result and the MAC address of the wireless access point in the wireless access point identification result.

The sending unit 63 is further configured to send the first instruction and the second instruction based on the correspondence between the IP address of the wireless access point and the IP address of the switch.

For more detailed descriptions of the receiving unit 61, the first establishment unit 62, the sending unit 63, and the second establishment unit 64, refer to related descriptions in the method embodiment shown in FIG. 3A and FIG. 3B. Details are not described herein again.

According to the wireless controller provided in this embodiment of this application, the VxLAN between the AP and the switch can be automatically configured on the AP, so that a WLAN device can support an overlay network. Manual operation is not required in a VxLAN establishment process, reducing workload for a user.

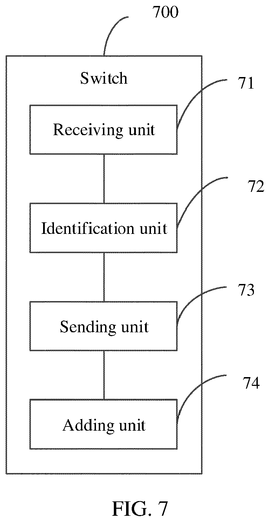

Based on a same concept of the method for establishing a VxLAN in the foregoing embodiment, as shown in FIG. 7, an embodiment of this application further provides a switch 700. The switch 700 may be applied to the method for establishing a VxLAN shown in FIG. 3A and FIG. 3B. The switch 700 may be the border node or the edge node shown in FIG. 2, or may be a component (for example, a chip) applied to the border node or the edge node. The switch 700 includes: a receiving unit 71, an identification unit 72, a sending unit 73, and an adding unit 74.

The receiving unit 71 is configured to snoop a dynamic host configuration protocol DHCP packet, where the DHCP packet includes a media access control MAC address of a device to which an internet protocol IP address is to be allocated.

The identification unit 72 is configured to identify the device to which the IP address is to be allocated as a wireless access point.

The sending unit 73 is configured to send the MAC address of the wireless access point to a wireless controller.

The receiving unit 71 is further configured to receive an instruction from the wireless controller, where the instruction includes the IP address of the wireless access point. The adding unit 74 is configured to add a record of a VTEP according to the instruction, where an IP address in the record the VTEP is the IP address of the wireless access point.

In an implementation, the identification unit 72 is configured to identify, based on an option in the DHCP packet, the device to which the IP address is to be allocated as the wireless access point.

For more detailed descriptions of the receiving unit 71, the identification unit 72, the sending unit 73, and the adding unit 74, refer to related descriptions in the method embodiment shown in FIG. 3A and FIG. 3B. Details are not described herein again. According to the switch provided in this embodiment of this application, the switch may identify the AP, and the wireless controller establishes a correspondence between the IP address of the identified AP and the IP address of the switch, so that the switch can learn whether the AP at a peer end of the VTEP is a peer end with which the switch is expected to establish a VxLAN. The switch receives the instruction of the wireless controller, and adds the record of the VTEP, so that the VxLAN between the AP and the switch is automatically configured on the AP. In this way, a WLAN device can support an overlay network, and manual operation is not required in a VxLAN establishment process, reducing workload for a user.

An embodiment of this application further provides a wireless controller, and the wireless controller is configured to perform the foregoing methods for establishing a VxLAN. Some or all of the foregoing methods may be implemented by using hardware, or may be implemented by using software or firmware.

Optionally, in specific implementation, the wireless controller may be a chip or an integrated circuit.

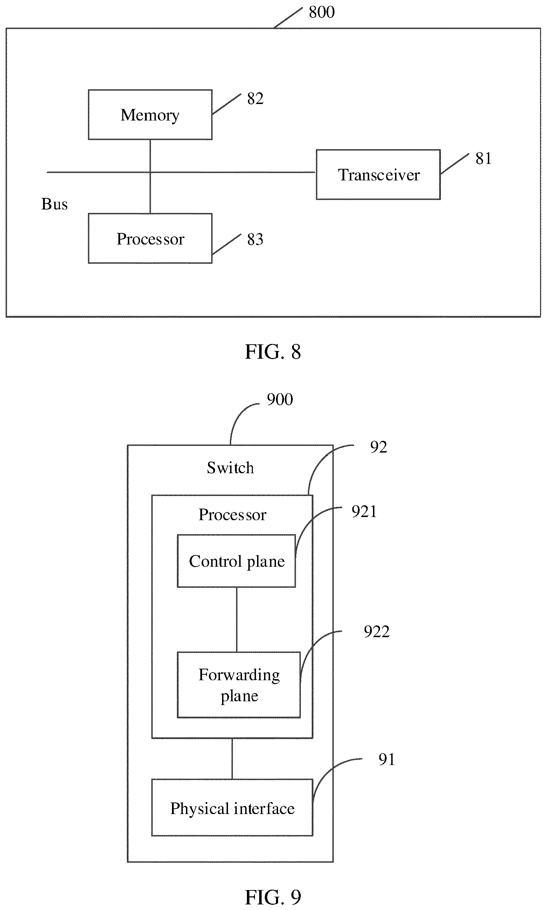

Optionally, when some or all of the VxLAN establishment methods in the foregoing embodiments are implemented by using software or firmware, the VxLAN establishment methods may be implemented by using a wireless controller 800 provided in FIG. 8. As shown in FIG. 8, the wireless controller 800 may include:
a transceiver 81, a memory 82, and a processor 83 (there may be one or more processors 83 in the wireless controller, and one processor is taken as an example in FIG. 8). In this embodiment, the transceiver 81, the memory 82, and the processor 83 may be connected by using a bus or in another manner. A bus connection is taken as an example in FIG. 8.

The processor 83 is configured to perform the method steps performed by the wireless controller in FIG. 3A and FIG. 3B.

Optionally, a program of the foregoing method for establishing a VxLAN may be stored in the memory 82. The memory 83 may be a physically independent unit, or may be integrated with the processor 83. The memory 82 may also be configured to store data. Optionally, when some or all of the methods for establishing a VxLAN in the foregoing embodiments are implemented by using software, the wireless controller may alternatively include only a processor. The memory configured to store a program is located outside the wireless controller. The processor is connected to the memory by using a circuit or a wire, and is configured to read and execute the program stored in the memory.

The processor may be a central processing unit (central processing unit, CPU), a network processor (network processor, NP), or a WLAN device.

The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (FPGA), a generic array logic (generic array logic, GAL), or any combination thereof.

The memory may include a volatile memory (volatile memory), for example, a random access memory (RAM). The memory may also include a non-volatile memory (non-volatile memory), for example, a flash memory (flash memory), a hard disk drive (hard disk drive, HDD), or a solid-state drive (solid-state drive, SSD). The memory may further include a combination of the foregoing types of memories.

According to the wireless controller provided in this embodiment of this application, the VxLAN between the AP and the switch can be automatically configured on the AP, so that a WLAN device can support an overlay network. Manual operation is not required in a VxLAN establishment process, reducing workload for a user.

An embodiment of this application further provides a switch. FIG. 9 is a schematic structural diagram of the switch according to this embodiment of this application. The switch 900 includes a physical interface 91 and a processor 92. The physical interface 91 is configured to receive and send an Ethernet frame and/or a VxLAN packet. The processor 92 is configured to perform the method steps performed by the switch in FIG. 3A and FIG. 3B.

There may be one or more physical interfaces 91. The physical interface 91 may include a wireless interface and/or a wired interface. For example, the wireless interface may include a WLAN interface, a Bluetooth interface, a cellular network interface, or any combination thereof. The wired interface may include an Ethernet interface, an asynchronous transfer mode interface, a fiber channel interface, or any combination thereof. The Ethernet interface can be an electrical interface or an optical interface. Although an Ethernet frame is encapsulated in a VXLAN packet, an outer layer of the VXLAN packet does not need to be transmitted over the Ethernet. The physical interface 91 does not necessarily include (although usually includes) an Ethernet interface.

There may be one or more processors 92. The processor 92 includes a central processing unit, a network processor, a graphics processing unit (graphics processing unit, GPU), an application-specific integrated circuit, a programmable logic device, or any combination thereof. The PLD may be a complex programmable logic device, a field programmable gate array, generic array logic, or any combination thereof. The processor 92 may include a control plane 921 and a forwarding plane 922. The control plane 921 and the forwarding plane 922 may be implemented by using an independent circuit, or may be integrated into one circuit. For example, the processor 92 is a multicore CPU. One or some of the multiple cores implement the control plane 921, and the other cores implement the forwarding plane 922. For another example, the control plane 921 is implemented by a CPU, and the forwarding plane 922 is implemented by an NP, an ASIC, an FPGA, or any combination thereof. For another example, the switch is a modular network device, the control plane 921 is implemented by a main control card, and the forwarding plane 922 is implemented by a line card. For another example, both the control plane 921 and the forwarding plane 922 are implemented by an NP with a control plane capability.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

All or some of the foregoing embodiments may be implemented by using software, hardware, firmware, or any combination thereof. When software or firmware is used to implement the embodiments, all or some of the embodiments may be implemented in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instruction may be stored in a computer-readable storage medium, or transmitted by using the computer-readable storage medium. The computer instruction may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium may be any medium accessible by a computer, or a data storage device, such as a server or a data center, integrating one or more usable media. The medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state drive (SSD).

## Claims

1. A method for establishing a virtual extensible local area network, VxLAN, comprising:
receiving (304), by a wireless controller, a message from a wireless access point, wherein the message comprises an internet protocol, IP, address of the wireless access point;
establishing (305), by the wireless controller, a control and provisioning of wireless access points, CAPWAP, channel in response to the message, wherein the CAPWAP channel is between the wireless controller and the wireless access point; and
sending (307), by the wireless controller, a first instruction to the wireless access point through the CAPWAP channel, wherein the first instruction is used to instruct the wireless access point to add a record of a first VxLAN tunnel end point, VTEP, and an IP address in the record of the first VTEP is an IP address of a switch with which the wireless access point is expected to establish a VxLAN, this IP address of the switch being obtained by the wireless access point and the VxLAN thereby being established.

2. The method according to claim 1, wherein the method further comprises: sending (308), by the wireless controller, a second instruction to the switch, wherein the second instruction is used to instruct the switch to add a record of a second VTEP, and an IP address in the record of the second VTEP is the IP address of the wireless access point.

3. The method according to claim 2, wherein the message further comprises a media access control, MAC, address of the wireless access point, and the method further comprises:
receiving (303), by the wireless controller, a wireless access point identification result sent by the switch, wherein the identification result comprises the MAC address of the wireless access point;
establishing (306), by the wireless controller, a correspondence between the IP address of the wireless access point and the IP address of the switch based on a correspondence between the IP address and the MAC address of the wireless access point in the message and a correspondence between the IP address of the switch sending the wireless access point identification result and the MAC address of the wireless access point in the wireless access point identification result; and
sending, by the wireless controller, the first instruction and the second instruction based on the correspondence between the IP address of the wireless access point and the IP address of the switch.

4. A wireless controller, comprising:
a receiving unit (61), configured to receive a message from a wireless access point, wherein the message comprises an internet protocol, IP, address of the wireless access point;
a first establishment unit (62), configured to establish a control and provisioning of wireless access points, CAPWAP, channel in response to the message, wherein the CAPWAP channel is between the wireless controller and the wireless access point; and
a sending unit (63), configured to send a first instruction to the wireless access point through the CAPWAP channel, wherein the first instruction is used to instruct the wireless access point to add a record of a first VxLAN tunnel end point, VTEP, and an IP address in the record of the first VTEP is an IP address of a switch, with which the wireless access point is expected to establish a VxLAN, wherein the VxLAN is established when the switch obtains said IP address of the switch.

5. The wireless controller according to claim 4, wherein the sending unit is further configured to send a second instruction to the switch, wherein the second instruction is used to instruct the switch to add a record of a second VTEP, and an IP address in the record of the second VTEP is the IP address of the wireless access point.

6. The wireless controller according to claim 5, wherein the message further comprises a media access control, MAC, address of the wireless access point; the wireless controller further comprises a second establishment unit (64);
the receiving unit is further configured to receive a wireless access point identification result sent by the switch, wherein the identification result comprises the MAC address of the wireless access point;
the second establishment unit is configured to establish a correspondence between the IP address of the wireless access point and the IP address of the switch based on a correspondence between the IP address and the MAC address of the wireless access point in the message and a correspondence between the IP address of the switch sending the wireless access point identification result and the MAC address of the wireless access point in the wireless access point identification result; and
the sending unit is further configured to send the first instruction and the second instruction based on the correspondence between the IP address of the wireless access point and the IP address of the switch.

## Patentansprüche

1. Verfahren zum Einrichten eines virtuellen erweiterbaren lokalen Netzwerks, VxLAN, umfassend:
Empfangen (304), durch eine drahtlose Steuerung, einer Nachricht von einem drahtlosen Zugangspunkt, wobei die Nachricht eine Internetprotokolladresse, IP-Adresse, des drahtlosen Zugangspunkts umfasst;
Einrichten (305), durch die drahtlose Steuerung, eines Kanals für eine Steuerung und Bereitstellung drahtloser Zugangspunkte, CAPWAP-Kanal, als Reaktion auf die Nachricht, wobei sich der CAPWAP-Kanal zwischen der drahtlosen Steuerung und dem drahtlosen Zugangspunkt befindet; und
Senden (307), durch die drahtlose Steuerung, einer ersten Anweisung an den drahtlosen Zugangspunkt durch den CAPWAP-Kanal, wobei die erste Anweisung verwendet wird, um den drahtlosen Zugangspunkt anzuweisen, einen Datensatz eines ersten VxLAN-Tunnelendpunkts, VTEP, hinzuzufügen, und wobei eine IP-Adresse in dem Datensatz des ersten VTEP eine IP-Adresse eines Schalters ist, mit dem erwartet wird, dass der drahtlose Zugangspunkt ein VxLAN einrichtet, wobei diese IP-Adresse des Schalters durch den drahtlosen Zugangspunkt erhalten wird und wobei dadurch das VxLAN eingerichtet wird.

2. Verfahren nach Anspruch 1, wobei das Verfahren ferner umfasst:
Senden (308), durch die drahtlose Steuerung, einer zweiten Anweisung an den Schalter, wobei die zweite Anweisung verwendet wird, um den Schalter anzuweisen, einen Datensatz eines zweiten VTEP hinzuzufügen, und wobei eine IP-Adresse in dem Datensatz des zweiten VTEP die IP-Adresse des drahtlosen Zugangspunkts ist.

3. Verfahren nach Anspruch 2, wobei die Nachricht ferner eine Medienzugangssteuerungsadresse, MAC-Adresse, des drahtlosen Zugangspunkts umfasst und das Verfahren ferner umfasst:
Empfangen (303), durch die drahtlose Steuerung, eines Identifikationsergebnisses eines drahtlosen Zugangspunkts, das durch den Schalter gesendet wird, wobei das Identifikationsergebnis die MAC-Adresse des drahtlosen Zugangspunkts umfasst;
Einrichten (306), durch die drahtlose Steuerung, einer Entsprechung zwischen der IP-Adresse des drahtlosen Zugangspunkts und der IP-Adresse des Schalters basierend auf einer Entsprechung zwischen der IP-Adresse und der MAC-Adresse des drahtlosen Zugangspunkts in der Nachricht und einer Entsprechung zwischen der IP-Adresse des Schalters, der das Identifikationsergebnis eines drahtlosen Zugangspunkts sendet, und der MAC-Adresse des drahtlosen Zugangspunkts in dem Identifikationsergebnis eines drahtlosen Zugangspunkts; und
Senden, durch die drahtlose Steuerung, der ersten Anweisung und der zweiten Anweisung basierend auf der Entsprechung zwischen der IP-Adresse des drahtlosen Zugangspunkts und der IP-Adresse des Schalters.

4. Drahtlose Steuerung, umfassend:
eine Empfangseinheit (61), die konfiguriert ist, um eine Nachricht von einem drahtlosen Zugangspunkt zu empfangen, wobei die Nachricht eine Internetprotokolladresse, IP-Adresse, des drahtlosen Zugangspunkts umfasst;
eine erste Einrichtungseinheit (62), die konfiguriert ist, um als Reaktion auf die Nachricht einen Kanal für eine Steuerung und Bereitstellung drahtloser Zugangspunkte, CAPWAP-Kanal, einzurichten, wobei sich der CAPWAP-Kanal zwischen der drahtlosen Steuerung und dem drahtlosen Zugangspunkt befindet; und
eine Sendeeinheit (63), die konfiguriert ist, um eine erste Anweisung durch den CAPWAP-Kanal an den drahtlosen Zugangspunkt zu senden, wobei die erste Anweisung verwendet wird, um den drahtlosen Zugangspunkt anzuweisen, einen Datensatz eines ersten VxLAN-Tunnelendpunkts, VTEP, hinzuzufügen, und wobei eine IP-Adresse in dem Datensatz des ersten VTEP eine IP-Adresse eines Schalters ist, mit dem erwartet wird, dass der drahtlose Zugangspunkt ein VxLAN einrichtet, wobei das VxLAN eingerichtet wird, wenn der Schalter die IP-Adresse des Schalters erhält.

5. Drahtlose Steuerung nach Anspruch 4, wobei die Sendeeinheit ferner konfiguriert ist, um dem Schalter eine zweite Anweisung zu senden, wobei die zweite Anweisung verwendet wird, um den Schalter anzuweisen, einen Datensatz eines zweiten VTEP hinzuzufügen und wobei eine IP-Adresse in dem Datensatz des zweiten VTEP die IP-Adresse des drahtlosen Zugangspunkts ist.

6. Drahtlose Steuerung nach Anspruch 5, wobei die Nachricht ferner eine Medienzugangssteuerungsadresse, MAC-Adresse, des drahtlosen Zugangspunkts umfasst;
die drahtlose Steuerung ferner eine zweite Einrichtungseinheit (64) umfasst;
die Empfangseinheit ferner konfiguriert ist, um ein Identifikationsergebnis eines drahtlosen Zugangspunkts zu empfangen, das durch den Schalter gesendet wird, wobei das Identifikationsergebnis die MAC-Adresse des drahtlosen Zugangspunkts umfasst;
die zweite Einrichtungseinheit konfiguriert ist, um eine Entsprechung zwischen der IP-Adresse des drahtlosen Zugangspunkts und der IP-Adresse des Schalters basierend auf einer Entsprechung zwischen der IP-Adresse und der MAC-Adresse des drahtlosen Zugangspunkts in der Nachricht und einer Entsprechung zwischen der IP-Adresse des Schalters, der das Identifikationsergebnis eines drahtlosen Zugangspunkts sendet, und der MAC-Adresse des drahtlosen Zugangspunkts in dem Identifikationsergebnis eines drahtlosen Zugangspunkts einzurichten; und
die Sendeeinheit ferner konfiguriert ist, um die erste Anweisung und die zweite Anweisung basierend auf der Entsprechung zwischen der IP-Adresse des drahtlosen Zugangspunkts und der IP-Adresse des Schalters zu senden.

## Revendications

1. Procédé d'établissement d'un réseau local extensible virtuel, VxLAN, comprenant :
la réception (304), par un dispositif de commande sans fil, d'un message provenant d'un point d'accès sans fil, le message comprenant une adresse de protocole Internet, IP, du point d'accès sans fil ;
l'établissement (305), par le dispositif de commande sans fil, d'un canal de commande et de fourniture de points d'accès sans fil, CAPWAP, en réponse au message, le canal CAPWAP étant situé entre le dispositif de commande sans fil et le point d'accès sans fil ; et
l'envoi (307), par le dispositif de commande sans fil, d'une première instruction au point d'accès sans fil par le biais du canal CAPWAP, la première instruction étant utilisée pour ordonner au point d'accès sans fil d'ajouter un enregistrement d'un premier point d'extrémité de tunnel VxLAN, VTEP, et une adresse IP dans l'enregistrement du premier VTEP étant une adresse IP d'un commutateur avec lequel le point d'accès sans fil est censé établir un VxLAN, cette adresse IP du commutateur étant obtenue par le point d'accès sans fil et le VxLAN étant ainsi établi.

2. Procédé selon la revendication 1, le procédé comprenant en outre :
l'envoi (308), par le dispositif de commande sans fil, d'une seconde instruction au commutateur, la seconde instruction étant utilisée pour ordonner au commutateur d'ajouter un enregistrement d'un second VTEP, et une adresse IP dans l'enregistrement du second VTEP étant l'IP l'adresse du point d'accès sans fil.

3. Procédé selon la revendication 2, le message comprenant en outre une adresse de commande d'accès au sport, MAC, du point d'accès sans fil, et le procédé comprenant en outre :
la réception (303), par le dispositif de commande sans fil, d'un résultat d'identification de point d'accès sans fil envoyé par le commutateur, le résultat d'identification comprenant l'adresse MAC du point d'accès sans fil ;
l'établissement (306), par le dispositif de commande sans fil, d'une correspondance entre l'adresse IP du point d'accès sans fil et l'adresse IP du commutateur sur la base d'une correspondance entre l'adresse IP et l'adresse MAC du point d'accès sans fil dans le message et une correspondance entre l'adresse IP du commutateur envoyant le résultat d'identification de point d'accès sans fil et l'adresse MAC du point d'accès sans fil dans le résultat d'identification de point d'accès sans fil ; et
l'envoi, par le dispositif de commande sans fil, de la première instruction et de la seconde instruction sur la base de la correspondance entre l'adresse IP du point d'accès sans fil et l'adresse IP du commutateur.

4. Dispositif de commande sans fil, comprenant :
une unité de réception (61), configurée pour recevoir un message provenant d'un point d'accès sans fil, le message comprenant une adresse de protocole Internet, IP, du point d'accès sans fil ;
une première unité d'établissement (62), configurée pour établir un canal de commande et de fourniture de points d'accès sans fil, CAPWAP, en réponse au message, le canal CAPWAP étant situé entre le dispositif de commande sans fil et le point d'accès sans fil ; et
une unité d'envoi (63), configurée pour envoyer une première instruction au point d'accès sans fil par le biais du canal CAPWAP, la première instruction étant utilisée pour ordonner au point d'accès sans fil d'ajouter un enregistrement d'un premier point d'extrémité de tunnel VxLAN, VTEP, et une adresse IP dans l'enregistrement du premier VTEP étant une adresse IP d'un commutateur, avec lequel le point d'accès sans fil est censé établir un VxLAN, le VxLAN étant établi lorsque le commutateur obtient ladite adresse IP du commutateur.

5. Dispositif de commande sans fil selon la revendication 4, l'unité d'envoi étant en outre configurée pour envoyer une seconde instruction au commutateur, la seconde instruction étant utilisée pour ordonner au commutateur d'ajouter un enregistrement d'un second VTEP, et une adresse IP dans l'enregistrement du second VTEP étant l'adresse IP du point d'accès sans fil.

6. Dispositif de commande sans fil selon la revendication 5, le message comprenant en outre une adresse de commande d'accès au support, MAC, du point d'accès sans fil ; le dispositif de commande sans fil comprenant en outre une seconde unité d'établissement (64) ;
l'unité de réception étant en outre configurée pour recevoir un résultat d'identification de point d'accès sans fil envoyé par le commutateur, le résultat d'identification comprenant l'adresse MAC du point d'accès sans fil ;
la seconde unité d'établissement étant configurée pour établir une correspondance entre l'adresse IP du point d'accès sans fil et l'adresse IP du commutateur sur la base d'une correspondance entre l'adresse IP et l'adresse MAC du point d'accès sans fil dans le message et une correspondance entre l'adresse IP du commutateur envoyant le résultat d'identification de point d'accès sans fil et l'adresse MAC du point d'accès sans fil dans le résultat d'identification de point d'accès sans fil ; et
l'unité d'envoi étant en outre configurée pour envoyer la première instruction et la seconde instruction sur la base de la correspondance entre l'adresse IP du point d'accès sans fil et l'adresse IP du commutateur.
